# EUROPÄISCHE PATENTSCHRIFT

(11) **EP 0 985 114 B1**
(45) Veröffentlichungstag und Bekanntmachung des Hinweises auf die Patenterteilung: **06.08.2003**
(21) Anmeldenummer: 98929377.4
(22) Anmeldetag: 26.05.1998
(51) Int. Cl.: F16L 37/092, F16L 47/00

(54) **LÄNGSKRAFTSCHLÜSSIGE ROHRVERBINDUNG**
PIPE COUPLING WITH LONGITUDINAL FORCE-FIT
RACCORD DE TUYAUX A LIAISON DE FORCE LONGITUDINALE

(30) Priorität: 04.06.1997 DE 29709718 U
(43) Veröffentlichungstag der Anmeldung: 15.03.2000
(73) Patentinhaber: Westfälische Kunstoff Technik Gmbh, 45549 Sprockhövel (DE)
(72) Erfinder: GADES, Manfred, D-29396 Schönewörde (DE)
(74) Vertreter: Lelgemann, Karl-Heinz, Dipl.-Ing.
(86) Internationale Anmeldenummer: EP9803088
(87) Internationale Veröffentlichungsnummer: WO98055792

(56) Entgegenhaltungen:
- EP-A- 0 378 035
- GB-A- 2 174 468
- GB-A- 2 226 861

## Beschreibung

Die Erfindung betrifft einen Rohrkörper nach dem Oberbegriff des Patentanspruchs 1.

Zur Verbindung von erdverlegten Rohrleitungen, die vielfach als Wasserleitungen verwendet Werden, werden von Wasserversorgungsunternehmen Steckmuffensysteme eingesetzt. Die Abdichtung erfolgt über einen Gummiring, der in einer Muffe sitzt. Um eine dichte Rohrverbindung zu erhalten, ist es auch bekannt, die Rohrleitungen aus Kunststoff herzustellen und in eine mit Heizdrähten versehene Muffe einzuschieben. Zur Verbindung werden die Heizdrähte der Muffe bestromt, so daß die Muffe mit den eingesteckten Rohrenden verschweißt wird. Auch Stumpfschweißung zweier Rohrenden ist bekannt.

Es sind auch Steckmuffensysteme bekannt, bei der die Steckmuffe aus Kunststoff gespritzt wird und in ihrem Inneren je einen Sitz für einen Klemmring (Haltering), der die axial sichere Verbindung garantiert, und einen Dichtring aufweist. Weil die Nuten für die Aufnahme des Dichtungs- und des Halterings in die Steckmuffe eingearbeitet werden müssen, besitzen die bekannten Steckmuffen eine große Wandstärke. Sie werden im Spritzgußverfahren hergestellt und stumpf an Rohre und Formstücke angeschweißt.

Nachteilig an den Steckmuffen ist, daß infolge der hohen Wandstärke ein hoher Materialbedarf besteht. Die Maßgenauigkeit im Inneren der Muffe ist schwer herzustellen und erfordert teure Spritzwerkzeuge. Die Herstellung der Rohre und Formteile ist recht zeitaufwendig, weil die Steckmuffe nach dem Produktionsprozeß an ein Rohrende angeschweißt werden muß. Infolge der notwendigen hohen Wanddicke ist es nicht möglich, die Muffe direkt bei der Rohrherstellung an das Ende des Rohrkörpers anzuformen.

Ausgehend von dieser Problemstellung liegt der Erfindung die Aufgabe zugrunde, einen Rohrkörper zu schaffen, durch den das Steckmuffensystem ersetzt werden kann.

Diese Aufgabe wird erfindungsgemäß durch einen Rohrkörper gelöst, der außer den Merkmalen im Oberbegriff des Patentanspruchs 1 auch die Merkmale im kennzeichnenden Teil desselben aufweist. Durch diese Ausgestaltung kann der Rohrkörper kostengünstig im Extruderverfahren hergestellt werden.

Aus der EP-A-0 378 035 ist ein Rohrkörper bekannt, in dessen einem Ende eine Befestigungsvorrichtung für ein anzuschließendes Rohr angeordnet ist. Diese Befestigungsvorrichtung ist mehrteilig ausgebildet und hat unterschiedliche Ausführungsformen. In einer dreiteiligen Ausführungsform sitzt eine Hülse innerhalb des Rohrendes und ist dort räumlich fixiert angeordnet. In dieser Hülse ist beweglich eine Klemme bzw. ein Klemmring vorgesehen, der einen Basisabschnitt, etwa mittig angeordnete, sich radial nach außen erstreckende Vorsprünge und Klauen aufweist, die am dem Inneren des Rohrkörpers zugewandten Ende des Klemmrings angeordnet sind. Dieser Klemmring ist in Axialrichtung des Rohrkörpers verschieblich innerhalb der Hülse aufgenommen und aus einem metallischen Werkstoff hergestellt. Die Fixierung dieses Klemmrings innerhalb der Hülse erfolgt mittels eines Ringstößels, der die Bewegung des Klemmrings innerhalb der Hülse begrenzt, indem er als Anschlag für den Außenrand und die Vorsprünge des Klemmrings fungiert. Beim Einschieben des Rohrs in den Rohrkörper wird der Klemmring räumlich in Richtung zum Rohrkörper hin versetzt, wobei dann bei einer gegenläufigen Bewegung des Rohrs die eigentliche Klemmkante des Klemmrings in die Außenumfangsfläche des Rohrs eindringt, wodurch das Rohr innerhalb des Rohrkörpers fixiert wird.

Der Klemmring wird mittels eines bestimmten Tiefziehvorgangs aus einem metallischen Rohling hergestellt. Hinsichtlich seiner Funktion entspricht dieser Klemmring demjenigen Klemmring, der in der metallischen Hülse des erfindungsgemäßen Rohrkörpers aufgenommen wird, nicht jedoch der mit dem erfindungsgemäßen Rohrkörper fest verbundenen metallischen Hülse. Dies ergibt sich schon daraus, daß bei allen Ausführungsformen des Rohrkörpers gemäß der EP-A-0 378 035 dieser Klemmring in bezug auf den Rohrkörper in Axialrichtung beweglich angeordnet ist. Eine räumliche Fixierung des Klemmrings in bezug auf den Rohrkörper macht bei den Ausführungen, wie sie in der EP-A-0 378 035 dargestellt und beschrieben sind, keinen Sinn, weil für die Funktionsfähigkeit der in der genannten Druckschrift dargestellten und beschriebenen Befestigungsvorrichtungen die Beweglichkeit des Klemmrings in bezug auf den Rohrkörper absolut erforderlich ist.

Die Hülse des erfindungsgemäßen Rohrkörpers verstärkt zum einen das Ende des Rohrkörpers und dient zum anderen zur Aufnahme des Klemmrings und des Dichtungsringes.

Die Hülse kann in das Rohrende eingepreßt sein.

Hierzu weist sie vorzugsweise an ihrem Ende einen radialen Vorsprung auf, der axial umgebogen ist, und als Anschlag für den Rohrkörper dient. Die Hülse steht dann radial und axial über das Ende des Rohrkörpers hervor. Vorzugsweise wird die Hülse in den Rohrkörper unmittelbar nach dessen Herstellung eingesteckt, wenn das Kunststoffmaterial noch weich ist.

Die Hülse kann auch in das Ende eingespritzt werden, also während der Rohrherstellung, die vorzugsweise durch Extrudieren erfolgt, eingearbeitet werden.

Anstatt einer axialen Einpressung der Hülse in den Rohrkörper kann diese auch radial eingepreßt werden. Hierzu ist die Hülse mindestens dreifach geteilt ausgebildet.

Um Korrosion zu vermeiden, ist die Hülse vorzugsweise aus Edelstahl ausgebildet.

Um eine sichere Abdichtung zwischen dem Rohrkörper und der Hülse zu gewährleisten, können auf der Außenseite der Hülse Dichtungselemente, beispielsweise Grafitdichtringe oder dergleichen, eingearbeitet werden.

Die Hülse muß nicht zwingend auch eine Sitzfläche für einen Dichtring aufweisen. Die Aufnahmenut für den Dichtring kann auch in das Rohrmaterial eingearbeitet sein.

Mit Hilfe einer Zeichnung soll die Erfindung nachfolgend näher erläutert werden. Es zeigt:
- Figur 1: einen erfindungsgemäß ausgebildeten Rohrkörper mit einem eingesteckten zylindrischen Rohr;

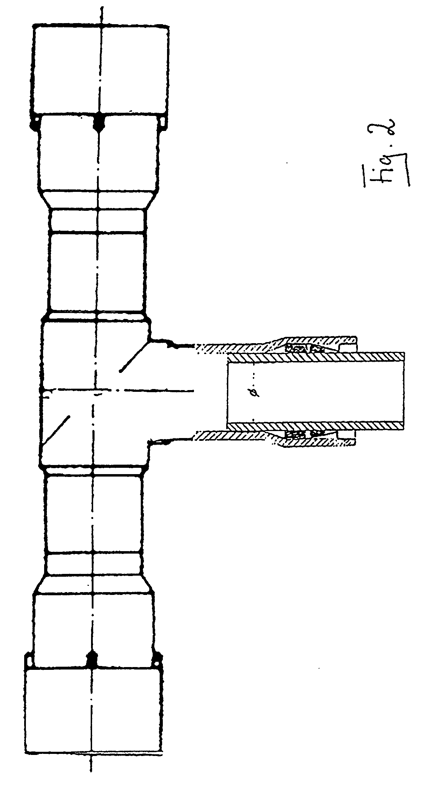

- Figur 2: einen als T-Stück ausgebildeten Rohrkörper mit einem eingesteckten zylindrischen Rohr;
- Figur 3: eine zum Einstecken in das Rohrende vorgesehene Hülse im Schnitt;
- Figur 4: eine zum Umspritzen vorgesehene Hülse im Schnitt;
- Figur 5: die perspektivische, teilweise aufgebrochene Darstellung der Hülse gemäß Figur 4;
- Figur 6: eine zum Umspritzen vorgesehene Hülse in perspektivischer, teilweise aufgebrochener Darstellung, ohne einen Sitz für einen Dichtring;
- Figur 7: eine weitere zum Umspritzen oder axialen Einpressen vorgesehene Hülse im Schnitt.

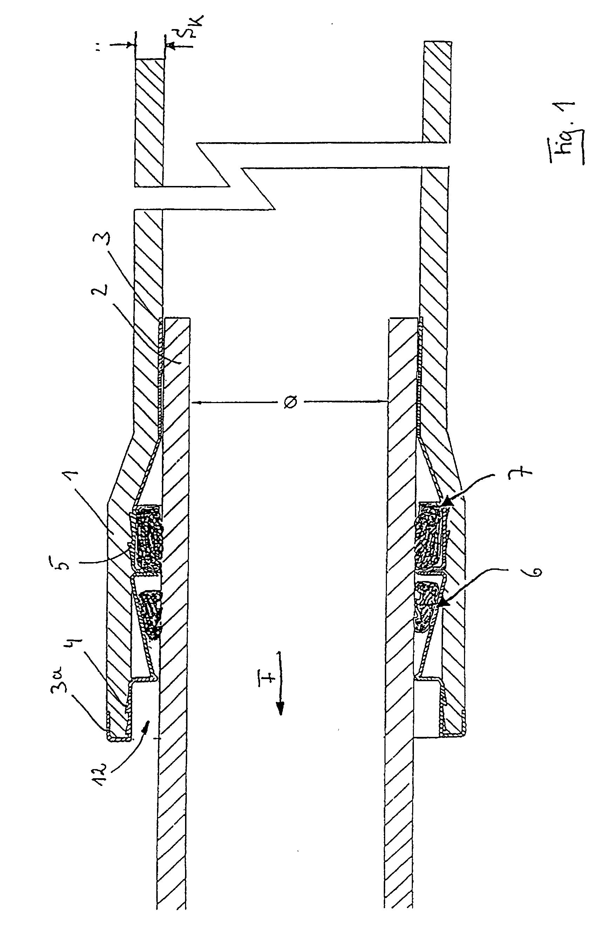

Figur 1 zeigt den Rohrkörper 1, in dessen Ende eine Hülse 3 eingesteckt ist. Der Rohrkörper 1 kann ein zylindrisches Rohr, ein Kurvenstück, ein Abzweigstück oder ein sonstiges Rohrverbindungsteil sein. Die Hülse 3 ist vorzugsweise aus Edelstahl hergestellt, kann aber auch aus jedem anderen metallischen Material bestehen. In der Hülse 3 ist ein Sitz 8 für einen Dichtring 7 und ein konischer Sitz 9 für einen Klemmring 6 vorgesehen. Die Verbindung des Rohrkörpers 1 mit dem zylindrischen Rohr 2 erfolgt durch Einschieben des zylindrischen Rohres 2 in das mit der Hülse 3 versehene Ende des Rohrkörpers 1. Die Abdichtung zwischen dem zylindrischen Rohr 2 und der Hülse 3 erfolgt über den Dichtring 7. Die längskraftschlüssige Verbindung wird durch den Klemmring 6 erzeugt. Wirkt auf das Rohr 2 eine Zugkraft in Pfeilrichtung F, wird der Klemmring 6 in den konischen Sitz 9 gezogen und verkrallt sich in der Wandung des Rohres 2, wodurch ein Herausziehen des Rohres 2 aus. der Hülse 3 bzw. dem Rohrkörper 1 verhindert wird.

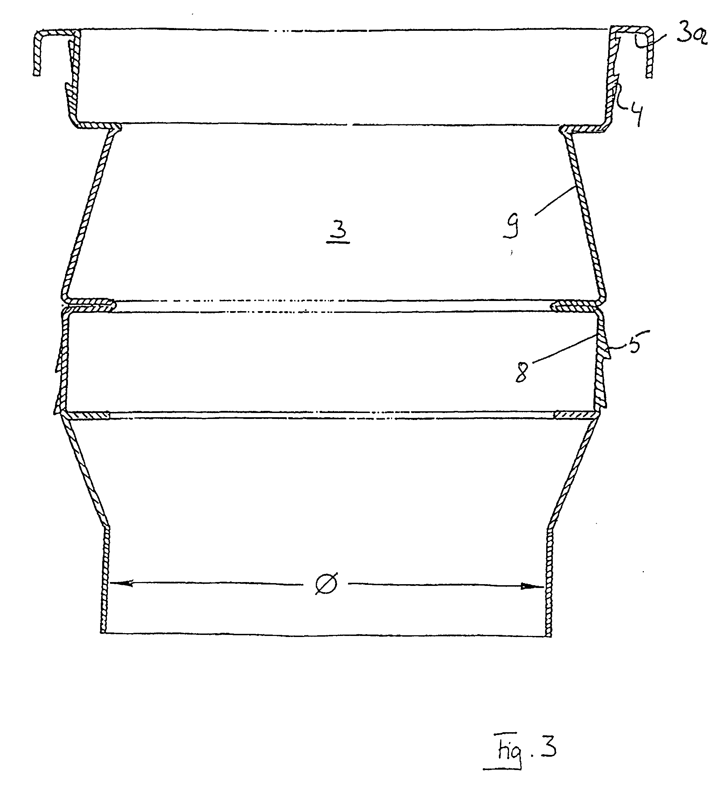

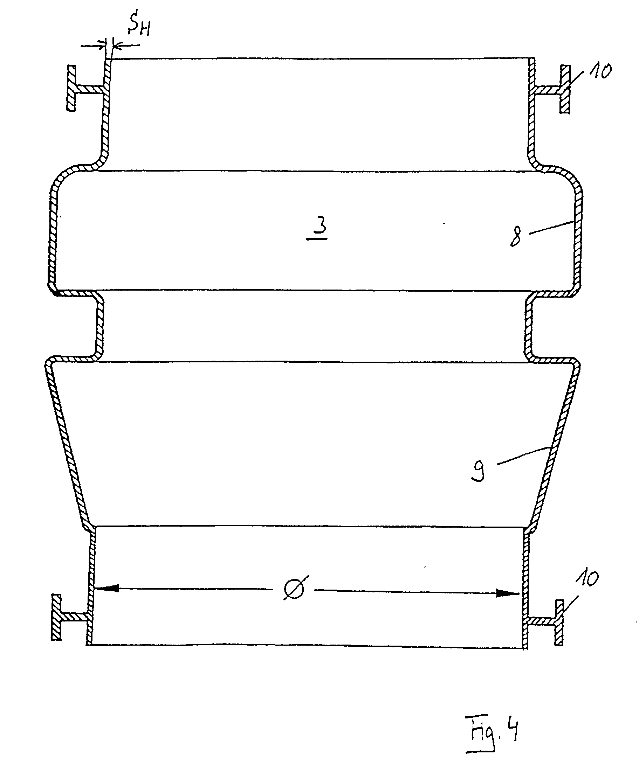

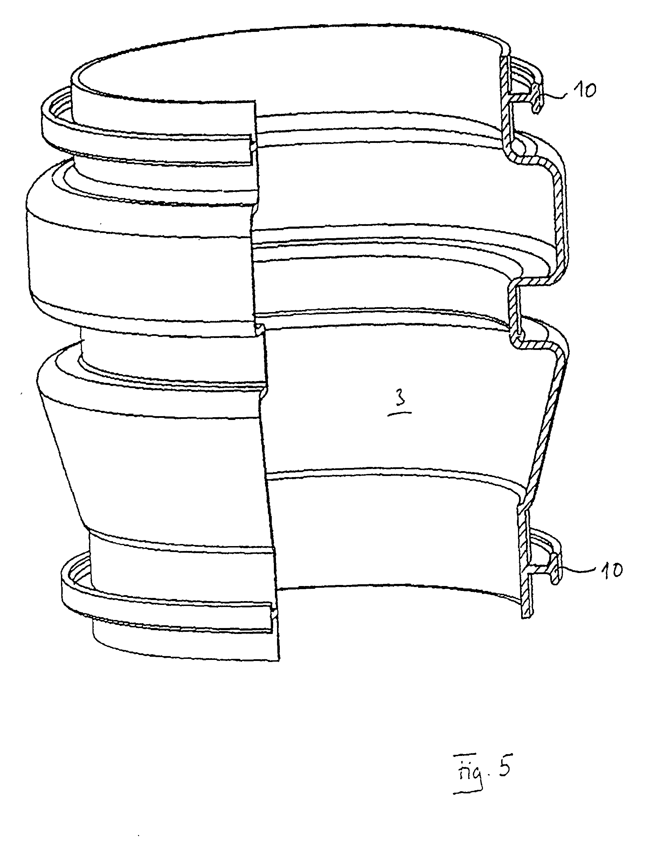

Um eine definierte Positionierung der Hülse 3 im Rohrkörper 1 zu erhalten, ist das dem Sitz 9 für den Klemmring 6 nähere Ende nach radial außen herausgezogen und in axialer Richtung zurückgebogen, so daß sich ein Anschlag 3a für den Rohrkörper 1 ausbildet. Um eine Verschiebung der Hülse 3 im Ende des Rohrkörpers 1 zu verhindern, ist diese mit axialen Hinterschneidungen 4, 5 versehen, die, wie Figur 3 zeigt, gegenläufig ausgebildet sind, so daß sie in beide Axialrichtungen wie Widerhaken wirken. Die Hülse 3 wird vorzugsweise im Umformverfahren hergestellt. Um einen sicheren Sitz im Rohrkörper 1 zu erhalten, sollte dieser weich sein, wenn die Hülse 3 eingesteckt (eingeschlagen) wird. Vorzugsweise erfolgt die Montage unmittelbar nach der Herstellung des Rohrkörpers 1, wenn er aus Kunststoff im Extrudierverfahren hergestellt wird. Anderenfalls müßte der Rohrkörper 1 nochmals auf seine Erweichungstemperatur erwärmt werden. Figuren 4 bis 7 zeigen Hülsen 3, die bei der Herstellung des Rohrkörpers 1 umspritzt werden können, also formschlüssig mit dem Rohrkörper 1 verbunden sind. Um einen sicheren formschlüssigen Sitz zu erhalten, sind radial und axial wirkende Hinterschneidungen 10, 11 vorgesehen.

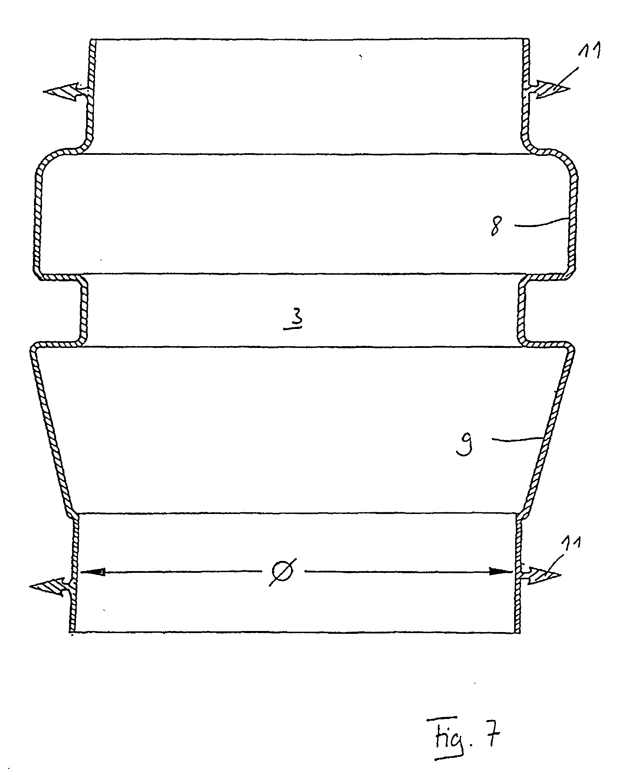

Wenn die in Figur 7 gezeigte Hülse dreiteilig ausgebildet ist, kann sie radial in einen Rohrkörper 1 eingepreßt werden. Die nach radial außen zugespitzten Hinterschneidungen 11 greifen dann in das weichere Material des Rohrkörpers 1 ein.

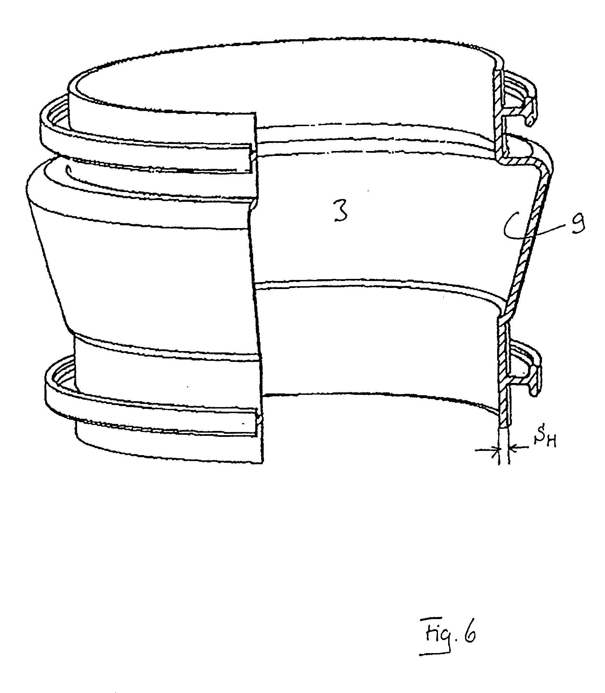

Die in Figur 6 gezeigte Hülse 3 ist ohne Sitz für den Dichtring 7 ausgebildet. Um diese Hülse 3 verwenden zu können, muß der Sitz für den Dichtring im Rohrkörper 1 ausgebildet sein. Die Wandstärke S_{H} der Hülse 3 ist gegenüber der Wandstärke S_{K} des Rohrkörpes 1 wesentlich kleiner. Wie Figur 1 erkennen läßt, ist das Verhältnis S_{K} : S_{H} ≥ 5.

## Patentansprüche

1. Rohrkörper, insbesondere Rohrleitung oder Rohrleitungsteil, wie Fitting oder Formstück, der zur längskraftschlüssigen Verbindung mit einem zylindrischen Rohr (2) in mindestens einem seiner Enden (12) eine kraft- und/oder formschlüssig mit ihm verbundene Hülse (3) aufweist, **dadurch gekennzeichnet, daß** die Hülse (3) aus einem metallischen Werkstoff ausgebildet ist, daß für das Verhältnis der Wandstärke S_{H} der Hülse (3) zur Wandstärke S_{K} des Rohrkörpers (1) gilt: S_{K} : S_{H} ≥ 5, und daß die Hülse (3) an ihrer Außenfläche in axialer Richtung weisende Hinterschneidungen (4, 5, 10, 11) aufweist.

2. Rohrkörper nach Anspruch 1, **dadurch gekennzeichnet, daß** die Hülse (3) in das Ende (12) eingepreßt ist.

3. Rohrkörper nach Anspruch 1, **dadurch gekennzeichnet, daß** die Hülse (3) in das Ende (12) eingespritzt ist.

4. Rohrkörper nach Anspruch 1, **dadurch gekennzeichnet, daß** die Hülse (3) eine Sitzfläche (9) für einen Haltering (6) aufweist.

5. Rohrkörper nach Anspruch 1 oder 4, **dadurch gekennzeichnet, daß** die Hülse (3) eine Sitzfläche (8) für einen Dichtring (7) aufweist.

6. Rohrkörper nach Anspruch 1, **dadurch gekennzeichnet, daß** die Hülse (3) mindestens dreifach geteilt ist.

7. Rohrkörper nach Anspruch 2, **dadurch gekennzeichnet, daß** ein Ende der Hülse (3) radial und axial über das Ende (12) des Rohrkörpers (1) hervorsteht.

8. Rohrkörper nach Anspruch 1, **dadurch gekennzeichnet, daß** die Hülse (3) aus Edelstahl ist.

## Claims

1. A pipe body, especially a pipeline or a pipeline part, such as a fitting or a shaped piece, which body, for longitudinal force locking connection to a cylindrical pipe (2), has, in at least one of its ends (12), a sleeve (3) which is connected to it in a force-locking and/or shape-locking manner, **characterised in that** the sleeve (3) is formed from a metal material, **in that** the following applies for the ratio of the wall thickness S_{H} of the sleeve (3) to the wall thickness S_{K} of the pipe body (1): S_{K} : S_{H} ≥ 5, and **in that** the sleeve (3) has undercuts (4, 5, 10, 11) pointing in the axial direction on its outer face.

2. A pipe body according to claim 1, **characterised in that** the sleeve (3) is pressed into the end (12).

3. A pipe body according to claim 1, **characterised in that** the sleeve (3) is injected into the end (12).

4. A pipe body according to claim 1, **characterised in that** the sleeve (3) has a seat (9) for a holding ring (6).

5. A pipe body according to claim 1 or 4, **characterised in that** the sleeve (3) has a seat (8) for a sealing ring (7).

6. A pipe body according to claim 1, **characterised in that** the sleeve (3) has at least three divisions.

7. A pipe body according to claim 2, **characterised in that** one end of the sleeve (3) projects radially and axially beyond the end (12) of the pipe body (1).

8. A pipe body according to claim 1, **characterised in that** the sleeve (3) is composed of high-grade steel.

## Revendications

1. Elément tubulaire, en particulier tuyau ou élément de tuyauterie, tel que raccord ou élément de jonction, qui pour la liaison par adhérence dans la direction longitudinale avec un tuyau (2) cylindrique, présente en au moins une de ses extrémités (12) un manchon (3) lié audit tuyau par adhérence et/ou par complémentarité de formes, **caractérisé en ce que** le manchon (3) est formé d'un matériau métallique, **en ce que** le rapport de l'épaisseur de paroi S_{H} du manchon (3) à l'épaisseur de paroi S_{K} de l'élément tubulaire (1) est S_{K} : S_{H} ≥ 5 et **en ce que** le manchon (3) présente sur sa surface extérieure des contre-dépouilles (4, 5, 10, 11) orientées dans la direction axiale.

2. Elément tubulaire selon la revendication 1, **caractérisé en ce que** le manchon (3) est emmanché dans l'extrémité (12).

3. Elément tubulaire selon la revendication 1, **caractérisé en ce que** le manchon (3) est moulé par injection dans l'extrémité (12).

4. Elément tubulaire selon la revendication 1, **caractérisé en ce que** le manchon (3) comporte un surface formant siège (9) pour une bague de retenue (6).

5. Elément tubulaire selon la revendication 1 ou 4, **caractérisé en ce que** le manchon (3) comporte un surface d'appui (9) pour un joint (7).

6. Elément tubulaire selon la revendication 1, **caractérisé en ce que** le manchon (3) est divisé au moins en trois.

7. Elément tubulaire selon la revendication 2, **caractérisé en ce qu'**une extrémité du manchon (3) dépasse radialement et axialement par rapport à l'extrémité (12) de l'élément tubulaire (1).

8. Elément tubulaire selon la revendication 1, **caractérisé en ce que** le manchon (3) est en acier spécial.
